# EUROPEAN PATENT SPECIFICATION

(11) **EP 4 328 098 B1**
(45) Date of publication and mention of the grant of the patent: **22.07.2026**
(21) Application number: 21944849.5
(22) Date of filing: 08.11.2021
(51) Int. Cl.: B60S 1/38, B60S 1/40, B60S 1/32

(54) **WINDSCREEN WIPER CONNECTING STRUCTURE**
VERBINDUNGSSTRUKTUR FÜR SCHEIBENWISCHER
STRUCTURE DE RACCORDEMENT D'ESSUIE-GLACE

(30) Priority: 11.06.2021 CN 202121308425 U
(43) Date of publication of application: 28.02.2024
(73) Proprietor: Danyang UPC Auto Parts Co., Ltd., 212300 Danyang, Zhenjiang, Jiangsu (CN)
(72) Inventor: CHANG, Chewei, Danyang, Jiangsu 212300 (CN)
(74) Representative: 2K Patent Partnerschaft mbB
(86) International application number: PCT/CN2021/129176
(87) International publication number: WO 2022/257350

(56) References cited:
- EP-A2- 2 711 253
- EP-B1- 2 535 231
- WO-A1-2013/182259
- WO-A1-2013/182259
- CN-A- 103 201 143
- CN-A- 103 459 212
- CN-A- 105 263 764
- DE-A1- 102010 062 928
- FR-A1- 2 600 291
- US-B2- 10 562 499

## Description

### BACKGOURND OF THE INVENTION

### Technical Field

The present disclosure relates to a technical field of a wiper product, and specifically provides a connection structure comprising a wiper and a wiper blade.

### Description of Related Art

Wipers are regular parts installed on vehicles, primarily used to clear dust, impurities, rainwater, etc. from windshields to ensure a clear view for the driver.

Currently commonly used wipers are boneless wipers, which mainly consist of a wiper and a wiper blade (or also called a scraping strip). The wiper is connected to a driving device of a vehicle, and the wiper is also connected to the wiper blade through a detachable connection method. This is because the wiper blade is a consumable, so the connection between the wiper and the wiper blade must be connected to each other in a way that allows easy disassembly.

However, the detachable connection method between the wiper and wiper blade commonly available on the market has some shortcomings, as follows. 1. Insufficient tightness of the detachable connection structure, which can easily cause the wiper and wiper blade to detach, leading to safety hazards. 2. Poor coverage of the detachable connection structure, which exposes the junction of the wiper and wiper blade, making it susceptible to dirt and damage.

DE 10 2010 062928 A1 discloses a connection structure according to the preamble of claim 1. An accommodating recess being spaced apart to the engagement block along the front-rear direction at a front side of the upper surface of the main body and the inverted U-shaped fastener being spaced apart to the slot along the front-rear direction at a front side of the top plate is not disclosed Edge portions integrally formed on left and right sides of the top plate overlapped on outer sides of left and right side walls of the main body are not disclosed.

EP 2 535 231 B1 discloses another connection structure comprising a wiper and a wiper blade

### SUMMARY OF THE INVENTION

It is an object of the present disclosure to provide a connection structure offering easy assembly and disassembly, high assembly tightness, and good protective functions.

This problem is solved by a connection structure as claimed in claim 1. Further advantageous embodiments are the subject-matter of the dependent claims.

The connection structure of the present disclosure greatly improves the installation efficiency during assembly, improves safety during usage, and prolongs the service life of the wiper.

According to the present disclosure there is provided a connection structure comprising a wiper and a wiper blade, comprising a connection base and a flip cover, wherein the connection base is installed on the wiper blade, the connection base is detachably connected to the wiper disposed on the connection base, the flip cover is hinged on the connection base, and the flip cover covers outside of the wiper and is detachably connected to the wiper, wherein the connection base includes a main body and a connection plate integrally formed on a lower side of the main body, the connection plate is installed on the wiper blade, and the main body is configured to support and be engaged with the wiper, wherein the wiper includes a top plate and two edge portions extended downward from two opposite sides of the top plate, and the top plate is provided with a slot penetrating through upper and lower surfaces of the top plate and an inverted U-shaped fastener with an opening oriented downward; the main body is provided with an engagement block protruding from an upper surface of the main body and an accommodating recess recessed in the upper surface of the main body, the engagement block is engaged with the slot, the accommodating recess integrally provides a support pillar in the accommodating recess, and a gap is defined between a peripheral side surface of the support pillar and an inner surface of the accommodating recess for engagement with the inverted U-shaped fastener; and when the wiper is connected to the main body through engagement with the slot and the inverted U-shaped fastener, the two edge portions are respectively overlapped on two opposite sides of the main body.

According to the present disclosure, the main body and the top plate are both elongated structures extending in a same direction, and a lengthwise direction of the main body and the top plate is a front-rear direction, and a width direction is a left-right direction; the accommodating recess and the engagement block are spaced apart along the front-rear direction at a front side of the upper surface of the main body, and the inverted U-shaped fastener and the slot are also spaced apart along the front-rear direction at a front side of the top plate; and the two edge portions are integrally formed on left and right sides of the top plate, and the two edge portions are respectively overlapped on outer sides of left and right side walls of the main body.

As a further improvement of the present disclosure, each of the edge portions is provided with a plurality of inverted U-shaped notches arranged at intervals along the front-rear direction; and two protruding ribs extending along the front-rear direction are integrally formed with and protrudes from the left and right side walls of the main body respectively, the two protruding ribs respectively abut against the edge portions, and a plurality of side grooves are arranged at intervals on each of the protruding ribs along the front-rear direction.

As a further improvement of the present disclosure, the wiper blade includes two elongated bars arranged side by side, a plurality of connection ribs fixedly connected between the two elongated bars, two lugs correspondingly disposed on the two elongated bars, and a first pivot shaft connected between the two lugs; and the connection plate is provided with an installation hole and an installation opening defined on a lower surface of the connection plate and communicating with the installation hole, and the first pivot shaft is assembled to the installation hole after being inserted through the installation opening.

As a further improvement of the present disclosure, the first pivot shaft is tightly fitted in the installation hole.

As a further improvement of the present disclosure, one side of the flip cover is hinge-mounted on a front side of the main body, another side of the flip cover is a free side, and after the flip cover is covered outside the wiper, another side of the flip cover is engaged with a rear side of the wiper.

As a further improvement of the present disclosure, a second pivot shaft and a torsion spring are provided, and one side of the flip cover is hinge-mounted on the front side of the main body through the second pivot shaft and the torsion spring.

As a further improvement of the present disclosure, another side of the flip cover is integrally provided with two hooks arranged on left and right sides in a mirrored symmetry, and the two hooks are engaged with a rear side of the wiper.

The beneficial effects of the present disclosure are as follows:
1. Compared to conventional technologies, the connection structure of the present disclosure offers easy assembly and disassembly, along with a high level of assembly tightness. This significantly improves the installation efficiency and safety during wiper assembly.
2. The connection structure provides excellent coverage and protection to the junction between the wiper and wiper blade, effectively extending the service life of the wiper.

### BRIEF DESCRIPTION OF THE DRAWINGS

FIG. 1 is a schematic structural view illustrating a connection structure described in the present disclosure.
FIG. 2 is a schematic exploded structural view of the connection structure of the present disclosure.
FIG. 3 is a schematic structural view of a wiper described in the present disclosure.
FIG. 4 is a schematic view illustrating installation of the connection structure described in the present disclosure onto the wiper blade.
FIG. 5 is a partially enlarged schematic structural view of FIG. 4.
FIG. 6 is a schematic view illustrating installing the connection structure described in the present disclosure on the wiper blade (For clarity, the drawing illustrates a partial structure of the wiper blade).
FIG. 7 is a schematic view illustrating installing the wiper on the connection base after the flip cover of the present disclosure is flipped opened by flipping the flip cover upward.
FIG. 8 is a schematic view illustrating installation of the wiper onto the connection base.
FIG. 9 is a schematic view illustrating a state after the flip cover of the present disclosure is closed by being flipped downward and fastened to the wiper.

The following description is provided with reference to the accompanying drawings:
1: wiper; 10: top plate; 11: edge portion; 12: slot; 13: inverted U-shaped fastener; 14: inverted U-shaped notch; 2: wiper blade; 20: elongated bar; 21: connection rib; 22: lug; 23: first pivot shaft; 3: connection structure; 30: connection base; 300: main body; 301: connection plate; 302: engagement block; 303: accommodating recess; 304: support pillar; 305: protruding rib; 306: installation hole; 307: installation opening; 31: flip cover; 310: hook.

### DETAILED DESCRIPTION

The following specific embodiments are provided to illustrate the present disclosure. Those skilled in the art can easily understand other advantages and effects of the present disclosure based on the disclosed contents in this specification. It should be noted that the structures, proportions, sizes, etc., depicted in the accompanying drawings are merely provided to facilitate the understanding and reading of persons skilled in the art, and they are not intended to limit the conditions under which the present disclosure can be implemented. Therefore, they do not have substantial technical significance. Any modifications to the structure, changes in proportion, or adjustments in size that do not affect the effectiveness or achievement of the objectives of the present disclosure should still fall within the protection scope covered by the disclosed technical contents of the present disclosure. The use of terms such as "first," "second," etc., in this specification is solely for the purpose of clear explanation and is not intended to limit the protection scope of the present disclosure. Changes or adjustments in their relative relationships that do not substantially alter the technical contents are also considered within the protection scope of the present disclosure.

### Embodiment:

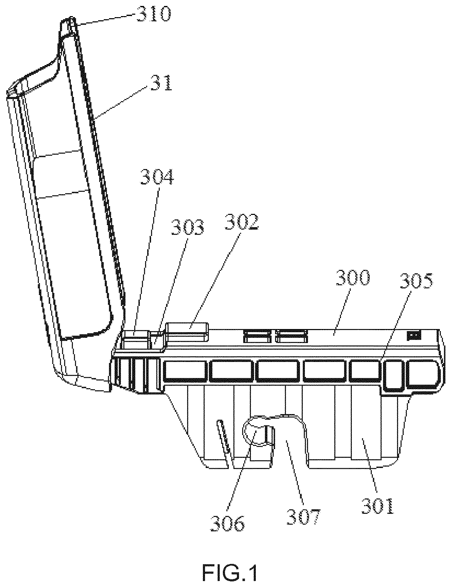

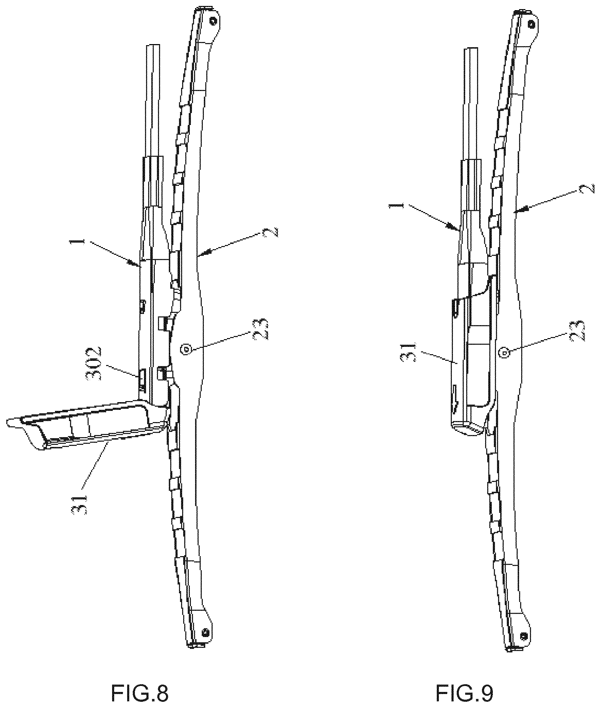

Please refer to FIGS. 1, 2, and 9, which respectively illustrate a structural view of a connection structure of the present disclosure, an exploded structural view of the connection structure, and a structural view of the connection structure assembled to a wiper 1 and a wiper blade 2.

The connection structure is configured to connect a wiper to a wiper blade. The connection structure includes a connection base 30 and a flip cover 31. The connection base 30 is installed on the wiper blade 2. The connection base 30 is detachably connected to the wiper 1 disposed on the connection base 30. The flip cover 31 is hinged on the connection base 30, and the flip cover 31 covers outside of the wiper 1 and is detachably connected to the wiper 1.

According to the invention, as shown in FIGS. 1, 2, 4, 5, 6, 7, and 8, the connection base 30 includes a main body 300 and a connection plate 301 integrally formed on a lower side of the main body 300, the connection plate 301 is installed on the wiper blade 2, and the main body 300 is configured to support and be engaged with the wiper 1.

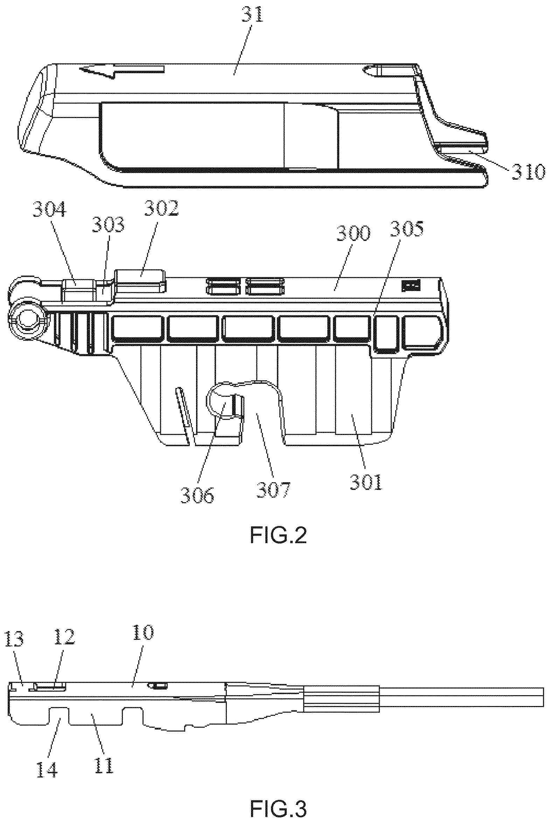

Furthermore, according to the invention, as shown in FIG. 3, the wiper 1 includes a top plate 10 and two edge portions 11 extended downward from two opposite sides of the top plate 10, and the top plate 10 is provided with a slot 12 penetrating through upper and lower surfaces of the top plate 10 and an inverted U-shaped fastener 13 with an opening oriented downward.

Please refer to FIGS. 1 and 2, the main body 300 is provided with an engagement block 302 protruding from an upper surface of the main body 300 and an accommodating recess 303 recessed in the upper surface of the main body 300, the engagement block 302 is engaged with the slot 12, the accommodating recess 303 integrally provides a support pillar 304 in the accommodating recess 303, and a gap is defined between a peripheral side surface of the support pillar 304 and an inner surface of the accommodating recess 303 for engagement with the inverted U-shaped fastener 13.

When the wiper 1 is connected to the main body 300 through engagement with the slot 12 and the inverted U-shaped fastener 13 (the restriction along the front-rear direction of the wiper may be realized), the two edge portions 11 are respectively overlapped on two opposite sides of the main body 300 (the restriction along the left-right direction of the wiper may be realized).

Furthermore, according to the invention, the wiper 1 is engaged with the main body 300. The main body 300 and the top plate 10 are both elongated structures extending in the same direction, a lengthwise direction of the main body 300 and the top plate 10 is defined as a front-rear direction, and a width direction is defined as a left-right direction.

The accommodating recess 303 and the engagement block 302 are spaced apart along the front-rear direction at a front side of the upper surface of the main body 300, and the inverted U-shaped fastener 13 and the slot 12 are also spaced apart along the front-rear direction at a front side of the top plate 10.

The two edge portions 11 are integrally formed on left and right sides of the top plate 10, and the two edge portions 11 are respectively overlapped on outer sides of left and right side walls of the main body 300.

Further, in some embodiments, each of the edge portions 11 is provided with a plurality of inverted U-shaped notches 14 arranged at intervals along the front-rear direction. The inverted U-shaped notches 14 may be used for assembly and aesthetic purposes.

Two protruding ribs 305 extending along the front-rear direction are integrally formed with and protrudes from the left and right side walls of the main body 300, respectively. The two protruding ribs 305 respectively abut against the edge portions 11, and a plurality of side grooves are arranged at intervals on each of the protruding ribs 305 along the front-rear direction for weight reduction and aesthetics.

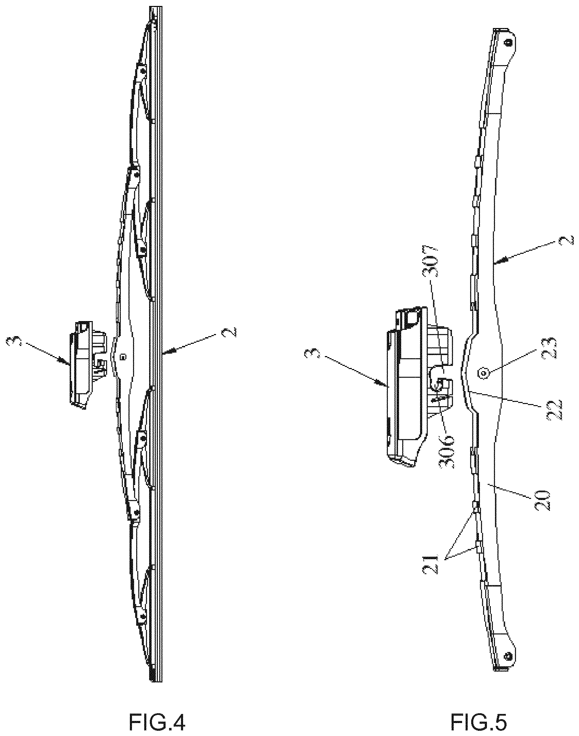

In the present embodiment, preferably, as shown in FIG. 5, the wiper blade 2 includes two elongated bars 20 arranged side by side, a plurality of connection ribs 21 fixedly connected between the two elongated bars 20, two lugs 22 correspondingly disposed on the two elongated bars 20, and a first pivot shaft 23 (or rivet) connected between the two lugs 22.

The connection plate 301 is provided with an installation hole 306 and an installation opening 307 defined on a lower surface of the connection plate 301 and communicating with the installation hole 306. The first pivot shaft 23 is assembled into the installation hole 306 after being inserted through the installation opening 307.

Furthermore, in some embodiments, the first pivot shaft 23 is tightly fitted in the installation hole 306. Although it is a tight fit, an operator may easily remove the first pivot shaft from the installation hole with a slight force.

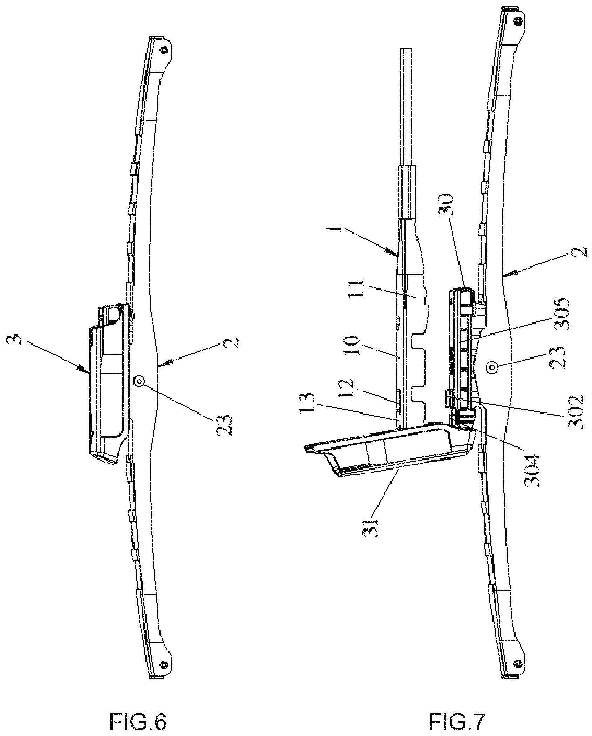

Referring to FIGS. 6, 7, 8, and 9, in the present embodiment, preferably, one side of the flip cover 31 is hinge-mounted on a front side of the main body 300, another side of the flip cover 31 is a free side, and after the flip cover 31 is covered outside the wiper 1, another side of the flip cover 31 is engaged with a rear side of the wiper 1.

Furthermore, in some embodiments, a second pivot shaft and a torsion spring are provided, and one side of the flip cover 31 is hinge-mounted on the front side of the main body 300 through the second pivot shaft and the torsion spring. Note: In addition to the combination of the second pivot shaft and the torsion spring, other hinge mounting methods may also be used, such as hinge connections using pivots, hinges, leaf hinges, etc. These are conventional technical means and therefore not described in detail here.

Furthermore, in some embodiments, as shown in FIG. 2, another side of the flip cover 31 is integrally provided with two hooks 310 arranged on left and right sides in a mirrored symmetry, and the two hooks 310 are engaged with a rear side of the wiper 1.

In summary, compared to conventional technologies, the connection structure of the present disclosure offers easy assembly and disassembly, along with a high level of assembly tightness. This significantly improves the installation efficiency and safety during wiper assembly. In addition to that, the connection structure provides excellent coverage and protection to the junction between the wiper and wiper blade, effectively extending the service life of the wiper.

## Claims

1. A wiper connection structure comprising a wiper (1) and a wiper blade (2), comprising a connection base (30) and a flip cover (31), wherein the connection base (30) is installed on the wiper blade (2), the connection base (30) is detachably connected to the wiper (1) disposed thereon, the flip cover (31) is hinged on the connection base (30), and the flip cover (31) covers outside of the wiper (1) and is detachably connected to the wiper (1), wherein
the connection base (30) comprises a main body (300) and a connection plate (301) integrally formed on a lower side of the main body (300), the connection plate (301) is installed on the wiper blade (2), and the main body (300) is configured to support and be engaged with the wiper (1), and
the wiper (1) comprises a top plate (10) and two edge portions (11) extended downward from two sides of the top plate (10) opposite to each other, and the top plate (10) is provided with a slot (12) penetrating through upper and lower surfaces of the top plate (10) and an inverted U-shaped fastener (13) with an opening facing downward; wherein
the main body (300) is provided with an engagement block (302) protruding from an upper surface of the main body (300) and an accommodating recess (303) recessed in the upper surface of the main body (300), the engagement block (302) is engaged with the slot (12), a support pillar (304) is integrally disposed in the accommodating recess (303), and a gap is defined between a peripheral side surface of the support pillar (304) and an inner surface of the accommodating recess (303) for engagement with the inverted U-shaped fastener (13); and
when the wiper (1) is engaged to the main body (300) through the slot (12) and the inverted U-shaped fastener (13), the two edge portions (11) are respectively overlapped with two sides of the main body (300) opposite to each other;
**characterized in that** the main body (300) and the top plate (10) are both elongated structures extending in a same direction, a lengthwise direction of the main body (300) and the top plate (10) is a front-rear direction, and a width direction is a left-right direction;
the accommodating recess (303) and the engagement block (302) are spaced apart along the front-rear direction at a front side of the upper surface of the main body (300), and the inverted U-shaped fastener (13) and the slot (12) are spaced apart along the front-rear direction at a front side of the top plate (10); and
the two edge portions (11) are integrally formed on left and right sides of the top plate (10), and the two edge portions (11) are respectively overlapped on outer sides of left and right side walls of the main body (300).

2. The wiper connection structure according to claim 1, wherein each of the edge portions (11) is provided with a plurality of inverted U-shaped notches (14) arranged at intervals along the front-rear direction; and
two protruding ribs (305) extending along the front-rear direction are integrally formed with and protrudes from left and right side walls of the main body (300), respectively, the two protruding ribs (305) respectively abut against the edge portions (11), and a plurality of side grooves are arranged at intervals on each of the protruding ribs (305) along the front-rear direction.

3. The wiper connection structure according to claim 1 or 2, wherein the wiper blade (2) comprises two elongated bars (20) arranged side by side, a plurality of connection ribs (21) fixedly connected between the two elongated bars (20), two lugs (22) correspondingly disposed on the two elongated bars (20), and a first pivot shaft (23) connected between the two lugs (22); and
the connection plate (301) is provided with an installation hole (306) and an installation opening (307) defined on a lower surface of the connection plate (301) and communicating with the installation hole (306), and the first pivot shaft (23) is assembled to the installation hole (306) through the installation opening (307).

4. The wiper connection structure according to claim 3, wherein the first pivot shaft (23) is fitted in the installation hole (306).

5. The wiper connection structure according to any of the preceding claims, wherein one side of the flip cover (31) is pivotally mounted on a front side of the main body (300), another side of the flip cover (31) is a free side, and after the flip cover (31) covers outside of the wiper (1), the another side of the flip cover (31) is engaged with a rear side of the wiper (1).

6. The wiper connection structure according to claim 5, wherein a second pivot shaft and a torsion spring are provided, and one side of the flip cover (31) is pivotally mounted on the front side of the main body (300) through the second pivot shaft and the torsion spring.

7. The wiper connection structure according to claim 5, wherein the another side of the flip cover (31) is integrally provided with two hooks (310) arranged on left and right sides in a mirrored symmetry, and the two hooks (310) are engaged with a rear side of the wiper (1).

## Patentansprüche

1. Scheibenwischer-Verbindungsstruktur, umfassend einen Scheibenwischer (1) und ein Scheibenwischerblatt (2), mit einer Verbindungsbasis (30) und einer umklappbaren Abdeckung (31), wobei die Verbindungsbasis (30) am Scheibenwischerblatt (2) angebracht ist, die Verbindungsbasis (30) lösbar mit dem darauf angeordneten Scheibenwischer (1) verbunden ist, die umklappbare Abdeckung (31) an der Verbindungsbasis (30) angelenkt ist und die umklappbare Abdeckung (31) die Außenseite des Scheibenwischers (1) abdeckt und lösbar mit dem Scheibenwischer (1) verbunden ist, wobei
die Verbindungsbasis (30) einen Hauptkörper (300) und eine Verbindungsplatte (301) umfasst, die einstückig an einer Unterseite des Hauptkörpers (300) ausgebildet ist, die Verbindungsplatte (301) am Scheibenwischerblatt (2) angebracht ist und der Hauptkörper (300) so ausgebildet ist, dass er den Scheibenwischer (1) trägt und mit diesem in Eingriff steht, und
der Scheibenwischer (1) eine obere Platte (10) und zwei Randabschnitte (11) aufweist, die sich von zwei einander gegenüberliegenden Seiten der oberen Platte (10) nach unten erstrecken, und die obere Platte (10) mit einem Schlitz (12), der die Ober- und Unterseite der oberen Platte (10) durchdringt, sowie mit einem umgekehrt U-förmigen Befestigungselement (13) mit einer nach unten gerichteten Öffnung versehen ist; wobei
der Hauptkörper (300) mit einem Eingriffsblock (302), der aus einer Oberseite des Hauptkörpers (300) herausragt, und einer Aufnahmeaussparung (303) versehen ist, die in die Oberseite des Hauptkörpers (300) eingelassen ist, der Eingriffsblock (302) in den Schlitz (12) eingreift, eine Stützsäule (304) einstückig in der Aufnahmeaussparung (303) angeordnet ist und zwischen einer Umfangsseitenfläche der Stützsäule (304) und einer Innenfläche der Aufnahmeaussparung (303) ein Spalt zum Eingriff mit dem umgekehrt U-förmigen Befestigungselement (13) definiert ist; und
wenn der Scheibenwischer (1) über den Schlitz (12) und das umgekehrt U-förmige Befestigungselement (13) mit dem Hauptkörper (300) in Eingriff steht, die beiden Randabschnitte (11) jeweils zwei einander gegenüberliegende Seiten des Hauptkörpers (300) überlappen;
**dadurch gekennzeichnet, dass** der Hauptkörper (300) und die obere Platte (10) beide als längliche Strukturen ausgebildet sind, die sich in derselben Richtung erstrecken, wobei die Längsrichtung des Hauptkörpers (300) und der oberen Platte (10) eine Vorwärts-Rückwärts-Richtung ist und die Breitenrichtung eine Links-Rechts-Richtung ist;
die Aufnahmeaussparung (303) und der Eingriffsblock (302) entlang der Vorwärts-Rückwärts-Richtung an einer Vorderseite der Oberseite des Hauptkörpers (300) voneinander beabstandet sind, und das umgekehrt U-förmige Befestigungselement (13) und der Schlitz (12) entlang der Vorwärts-Rückwärts-Richtung an einer Vorderseite der oberen Platte (10) voneinander beabstandet sind; und
die beiden Randabschnitte (11) an der linken und rechten Seite der oberen Platte (10) einstückig ausgebildet sind, und die beiden Randabschnitte (11) jeweils die Außenseiten der linken und rechten Seitenwände des Hauptkörpers (300) überlappen.

2. Scheibenwischer-Verbindungsstruktur nach Anspruch 1, wobei jeder der Randabschnitte (11) mit einer Vielzahl von umgekehrt U-förmigen Aussparungen (14) versehen ist, die in Abständen entlang der Längsrichtung angeordnet sind; und
zwei vorstehende Rippen (305), die sich entlang der Längsrichtung erstrecken, einstückig mit den linken und rechten Seitenwänden des Hauptkörpers (300) ausgebildet sind und von diesen vorstehen, wobei die beiden vorstehenden Rippen (305) jeweils an den Randabschnitten (11) anliegen und eine Vielzahl von seitlichen Nuten in Abständen auf jeder der vorstehenden Rippen (305) entlang der Längsrichtung angeordnet ist.

3. Scheibenwischer-Verbindungsstruktur nach Anspruch 1 oder 2, wobei das Scheibenwischerblatt (2) zwei nebeneinander angeordnete längliche Stäbe (20), eine Vielzahl von Verbindungsrippen (21), die fest zwischen den beiden länglichen Stäben (20) verbunden sind, zwei Laschen (22), die entsprechend an den beiden länglichen Stäben (20) angeordnet sind, und eine erste Schwenkachse (23) aufweist, die zwischen den beiden Laschen (22) verbunden ist; und
die Verbindungsplatte (301) mit einer Befestigungsbohrung (306) und einer Einbauöffnung (307) versehen ist, die an einer Unterseite der Verbindungsplatte (301) ausgebildet ist und mit der Befestigungsbohrung (306) in Verbindung steht, und die erste Schwenkachse (23) über die Einbauöffnung (307) in die Befestigungsbohrung (306) eingesetzt ist.

4. Scheibenwischer-Verbindungsstruktur nach Anspruch 3, wobei die erste Schwenkachse (23) in die Befestigungsbohrung (306) eingesetzt ist.

5. Scheibenwischer-Verbindungsstruktur nach einem der vorstehenden Ansprüche, wobei eine Seite der umklappbaren Abdeckung (31) schwenkbar an einer Vorderseite des Hauptkörpers (300) angebracht ist, eine andere Seite der umklappbaren Abdeckung (31) eine freiliegende Seite ist und, nachdem die umklappbare Abdeckung (31) die Außenseite des Scheibenwischers (1) abdeckt, die andere Seite der umklappbaren Abdeckung (31) mit einer Rückseite des Scheibenwischers (1) in Eingriff steht.

6. Scheibenwischer-Verbindungsstruktur nach Anspruch 5, wobei eine zweite Schwenkachse und eine Torsionsfeder vorgesehen sind und eine Seite der umklappbaren Abdeckung (31) über die zweite Schwenkachse und die Torsionsfeder schwenkbar an der Vorderseite des Hauptkörpers (300) angebracht ist.

7. Scheibenwischer-Verbindungsstruktur nach Anspruch 5, wobei die andere Seite der umklappbaren Abdeckung (31) mit zwei mit dieser einstückig ausgebildeten Haken (310) versehen ist, die auf der linken und rechten Seite spiegelbildlich symmetrisch angeordnet sind, und die beiden Haken (310) mit einer Rückseite des Scheibenwischers (1) in Eingriff stehen.

## Revendications

1. Une structure de raccordement d'essuie-glace comprenant un essuie-glace (1) et un balai d'essuie-glace (2), comprenant une base de raccordement (30) et un couvercle rabattable (31), dans laquelle la base de raccordement (30) est installée sur le balai d'essuie-glace (2), la base de raccordement (30) est reliée de manière amovible à l'essuie-glace (1) disposé sur celle-ci, le couvercle rabattable (31) est articulé sur la base de raccordement (30), et le couvercle rabattable (31) recouvre l'extérieur de l'essuie-glace (1) et est relié de manière amovible à l'essuie-glace (1), dans laquelle
la base de connexion (30) comprend un corps principal (300) et une plaque de connexion (301) formée d'un seul tenant sur la face inférieure du corps principal (300), la plaque de connexion (301) est installée sur le balai d'essuie-glace (2), et le corps principal (300) est configuré pour supporter et s'engager avec l'essuie-glace (1), et
l'essuie-glace (1) comprend une plaque supérieure (10) et deux parties de bord (11) s'étendant vers le bas à partir de deux côtés de la plaque supérieure (10) opposés l'un à l'autre, et la plaque supérieure (10) est pourvue d'une fente (12) traversant les surfaces supérieure et inférieure de la plaque supérieure (10) et d'une attache en forme de U inversé (13) avec une ouverture tournée vers le bas ; dans laquelle
le corps principal (300) est muni d'un bloc d'engagement (302) faisant saillie depuis une surface supérieure du corps principal (300) et d'un évidement de logement (303) creusé dans la surface supérieure du corps principal (300), le bloc d'engagement (302) est engagé dans la fente (12), un pilier de support (304) est disposé d'un seul tenant dans l'évidement de logement (303), et un espace est défini entre une surface latérale périphérique du pilier de support (304) et une surface intérieure de l'évidement de logement (303) pour l'engagement avec l'élément de raccordement en forme de U inversé (13) ; et
lorsque l'essuie-glace (1) est engagé sur le corps principal (300) par l'intermédiaire de la fente (12) et de l'attache en forme de U inversé (13), les deux parties de bord (11) recouvrent respectivement les deux côtés du corps principal (300) situés à l'opposé l'un de l'autre ;
**caractérisé en ce que** le corps principal (300) et la plaque supérieure (10) sont tous deux des structures allongées s'étendant dans une même direction, la direction longitudinale du corps principal (300) et de la plaque supérieure (10) est une direction avant-arrière, et la direction de la largeur est une direction gauche-droite ;
l'évidement de logement (303) et le bloc d'engagement (302) sont espacés l'un de l'autre dans la direction avant-arrière sur une face avant de la surface supérieure du corps principal (300), et l'élément de raccordement en forme de U inversé (13) et la fente (12) sont espacés l'un de l'autre dans la direction avant-arrière sur une face avant de la plaque supérieure (10) ; et
les deux parties de bord (11) sont formées d'un seul tenant sur les côtés gauche et droit de la plaque supérieure (10), et les deux parties de bord (11) recouvrent respectivement les côtés extérieurs des parois latérales gauche et droite du corps principal (300).

2. La structure de raccordement d'essuie-glace selon la revendication 1, dans laquelle chacune des parties de bord (11) est pourvue d'une pluralité d'encoches en forme de U inversé (14) disposées à intervalles réguliers dans la direction avant-arrière ; et
deux nervures saillantes (305) s'étendant dans la direction avant-arrière sont formées d'un seul tenant avec les parois latérales gauche et droite du corps principal (300) et font saillie à partir de celles-ci, respectivement, les deux nervures saillantes (305) venant respectivement en butée contre les parties de bord (11), et une pluralité de rainures latérales étant disposées à intervalles réguliers sur chacune des nervures saillantes (305) dans la direction avant-arrière.

3. La structure de raccordement d'essuie-glace selon la revendication 1 ou 2, dans laquelle le balai d'essuie-glace (2) comprend deux barres allongées (20) disposées côte à côte, une pluralité de nervures de raccordement (21) reliées de manière fixe entre les deux barres allongées (20), deux pattes (22) disposées de manière correspondante sur les deux barres allongées (20), et un premier axe de pivotement (23) relié entre les deux pattes (22) ; et
la plaque de raccordement (301) est pourvue d'un trou de montage (306) et d'une ouverture de montage (307) définie sur une surface inférieure de la plaque de raccordement (301) et communiquant avec le trou de montage (306), et le premier axe de pivotement (23) est assemblé au trou de montage (306) à travers l'ouverture de montage (307).

4. La structure de raccordement d'essuie-glace selon la revendication 3, dans laquelle le premier axe de pivotement (23) est monté dans le trou de montage (306).

5. La structure de raccordement d'essuie-glace selon l'une quelconque des revendications précédentes, dans laquelle un côté du couvercle rabattable (31) est monté de manière pivotante sur une face avant du corps principal (300), un autre côté du couvercle rabattable (31) est un côté libre, et une fois que le couvercle rabattable (31) recouvre l'extérieur de l'essuie-glace (1), l'autre côté du couvercle rabattable (31) s'engage avec une face arrière de l'essuie-glace (1).

6. La structure de raccordement d'essuie-glace selon la revendication 5, dans laquelle un deuxième axe de pivotement et un ressort de torsion sont prévus, et un côté du couvercle rabattable (31) est monté de manière pivotante sur la face avant du corps principal (300) par l'intermédiaire du deuxième axe de pivotement et du ressort de torsion.

7. La structure de raccordement d'essuie-glace selon la revendication 5, dans laquelle l'autre côté du couvercle rabattable (31) est muni d'un seul tenant de deux crochets (310) disposés sur les côtés gauche et droit en symétrie miroir, et les deux crochets (310) sont engagés avec une face arrière de l'essuie-glace (1).
